# NEW EUROPEAN PATENT SPECIFICATION

(11) **EP 1 150 843 B2**
(45) Date of publication and mention of the opposition decision: **23.01.2008**
(45) Mention of the grant of the patent: 07.07.2004
(21) Application number: 99972580.7
(22) Date of filing: 19.11.1999
(51) Int. Cl.: B41F 17/00, B41F 19/08, B41M 3/00, B41M 7/00, G03H 1/02

(54) **METHOD AND DEVICE FOR ROTATIONAL MOULDING OF SURFACE RELIEF STRUCTURES**
VERFAHREN UND VORRICHTUNG ZUM ROTATIONSFORMEN VON STRUKTUREN MIT OBERFLÄCHENRELIEF
PROCEDE ET DISPOSITIF DE MOULAGE PAR ROTATION DE STRUCTURES A RELIEF DE SURFACE

(30) Priority: 19.11.1998 DK 151898
(43) Date of publication of application: 07.11.2001
(73) Proprietor: NILPETER A/S, DK-4200 Slagelse (DK); Stensborg ApS, 4000 Roskilde (DK)
(72) Inventor: LINDVOLD, Lars, DK-2980 Kokkedal (DK); STENSBORG, Jan, DK-1620 Copenhagen V (DK); RASMUSSEN, Torben, DK-2650 Hvidovre (DK)
(74) Representative: Smart, Peter John
(86) International application number: PCT/DK1999/000642
(87) International publication number: WO 2000/030854

(56) References cited:
- EP-A- 0 338 378
- EP-A- 0 675 066
- EP-A- 0 896 259
- EP-B- 0 439 050
- WO-A-88/09252
- WO-A-94/18609
- WO-A-94/19201
- DE-A- 4 132 476
- JP-A- 58 144 879
- US-A- 4 294 782
- US-A- 4 758 296
- US-A- 5 116 548
- US-A- 5 670 003

## Description

The present invention relates in a broad aspect to a method and a device for applying structures to a medium being conveyed on a web. The method and device utilise a moulding process in which structures are moulded into/onto the surface of the medium.

In a specific embodiment, the present invention relates to a process facilitating the replication of structures in a conventional printing machine. The replication method is integrated as a part of the machine, thus making it possible to perform the application of structures in-line. As the replication of the structure takes place in-line, the application of, e.g., holograms will be in register with the printed material.

### BACKGROUND FOR THE INVENTION AND INTRODUCTION TO THE INVENTION.

US 4, 294, 782 discloses a method and apparatus for substantially instantaneous liquid molding of amides exemplified by gramaphone records and wall coverings.

Application of structures such as holograms as an integral part of printed materials, which structures may be used for decoration or as a security element or a combination of both, is done when the printed material is manufactured on a rotational printing machine by transferring the hologram, which has been embossed in a previous process, to the printing material by heat embossing. Such a process is expensive as the holograms typically are embossed on a web material on which they are repeated disrespecting the repeating sequence of the printing machine being used for printing, whereby each hologram has to be positioned with respect to a corresponding picture being printed or is to be printed by the printing machine. This positioning will of course limit the production speed of the printing unit just as it increases the waste of material of the holograms.

EP 0 338 378 discloses a method and an apparatus of treating sheet material in a continuous process comprising the steps of:
printing a visual pattern on at least one side of said sheet material in a first area thereof, thereafter applying a resin in liquid form to a second area of said at least one side of said sheet material, said second area being separate from said first area, holding against said resin a mold of a surface relief pattern in the form of a light diffraction pattern, thereby causing a surface of said resin to conform with said pattern, directing actinic radiation through said sheet material to said resin in a manner to harden said resin while being carried by said mold, separating said mold from the hardened resin, thereby to leave the hardened resin in place on said sheet material with the surface relief pattern contained therein, and coating substantial only the hardened resin in said descrete areas with a reflective material in a manner to follow the surface relief pattern, whereby said sheet material is treated with both conventional printing and a light diffraction pattern in sequential steps of a continuous process.

WO 94/18609 discloses a process for the simultaneous replication and direct application of holograms and other diffraction grids on various printing materials. It discloses a light curing hologram printing system in which the curable polymer is optionally transferred to a web and thereafter contacted by a printing cylinder around the periphery of which the web is led, with light being applied form within the printing cylinder over a substantial web length.

US 5,670,003 discloses a method for forming a holographic image or diffraction grating image on a substrate comprising the steps of: (a) forming a composite sheet by (i) depositing directly on one surface of a plastic film a layer of metal having a thickness in the range of 20 millimicrons to 100 millimicrons; (ii) applying to said layer of metal a heat softenable lacquer coating; (iii) applying to said lacquer coating a heat activatible adhesive; (b) bringing a substrate into contact with said adhesive; (c) applying heat and pressure to said film to compress said composite sheet against said substrate to (i) cause said adhesive to adhere to said substrate, and (ii) cause said composite sheet to delaminate from said film; (d) removing said film from said composite sheet thereby leaving said composite sheet with a first surface engaged to said substrate and a second surface exposed, said second exposed surface being a surface of said metal layer; and (e) thereafter directly engaging said second surface under heat and pressure with a die having a holographic image or diffraction grating image formed therein to form an image in said layer of metal and said lacquer coating. The present invention relates to a process in which the structure is replicated in the printing unit and the invention render superfluous the pre-production of the structure holograms. A moulding process not limiting the speed of production of the printing unit provides production of the structure. Also the waste of the material on which the structures are provided to in known systems is avoided as the structure according to the present invention is laid down in a print colour or a lacquer almost always being a component of the printing material, for instance the structure may be applied to the surface of print colour or lacquer defining the ordinary printed picture, patter and/or text .

### BRIEF DESCRIPTION OF THE INVENTION

These and many more advantages have been provided by a method and a device for providing structures to medium, which method and device also solves the above-mentioned problems connected with application of the prior art methods.

In a first and broad aspect of the present invention the invention relates to a method according to claim 1.

The term structure denotes, when used herein, a geometrical pattern comprising for instance peaks and valleys whereby light when directed towards the structure is diffracted and/or reflected in a way being at least partially determined by the geometrical pattern.

The term structure is also to be understood in the context of the present application to cover structures that have small dimensions. This term is therefor not to be construed in the sense that only structures having a characteristic length scale in the micro-meter range is considered in the invention. Therefore the scope of the claims comprises structures having a characteristic length scale below the micro-meter range, such a nano-structures and having a characteristic length scale above the micro-meter range.

Providing of the structure in/to the medium may be performed in different ways according to the present invention. Preferably, the structure is to be applied in a limited area, such as the extension of the medium, and in these cases the structure is provided by an advancing front method. In this case the front (being the line separating the part of the medium which has been applied the structure and the part of the medium which has hot been applied structures) advances until the whole structure has been applied to the medium.

The phrase "conveying the web" may be understood in the sense that the medium and the web are transported together to the moulding station. In some preferred embodiments, the web is a sheet having an extension being longer than the distance between the position of application and the moulding station. In this case conveying the web may preferably be construed as conveying at least the part of the web on which the medium is applied.

The curing is a step in which the medium is treated in such a way that it may be conveyed without damaging the structure provide in/to the medium. A typical example of this is one where the medium is soft such as liquid initially and where the stabilising step hardens at least the surface of the medium.

As to be understood by the following description of the invention, the invention and the claims relates to moulding diffractive optical elements also known as holographic optical elements including holograms applicable for security and decoration.

In a broad aspect of the present invention the order in which the different steps comprised in the method is listed is not casually chosen as the order reflects a natural order for executing the different steps. Included in this statement is also the situation in which curing of medium occurs simultaneously or substantially simultaneously with providing of the structure.

The first step to be performed is to apply the medium to some kind of carrier web adapted to carry/convey the medium to a moulding station. The next step is to provide the structure to the medium after the medium has been conveyed/earned to the moulding station. The word moulding station is meant to include processes in which the physical properties of the medium are changed for instance during application of the structure. The change of physical properties may in certain embodiment be changed temporarily while the structure is applied where after the original properties of the medium are regained either actively or passively.

Typical changes of properties are phase changes such as from liquid to solid phase or from solid to liquid during moulding and back to solid during stabilising.

By setting the steps of the method according to the present invention in the order stated above the process of moulding the structures is divided from the process of application of the medium to the web which is found to be very advantageous as the two processes can be optimised independently of each other, thereby providing solutions to problems encountered by prior art methods/systems as will become clear in the following description of the invention.

In the method according to the present invention the medium is being conveyed as the structure is provided. By conveying the medium while the structure is provided the speed of the method is not limited by providing the structure.

Furthermore, the curing of the medium to stabilise the shape of structures provided thereto occurs substantially while the medium is being provided the structure.

In a preferred embodiment of the method according to the present invention the curing is performed by focusing a streak of electromagnetic radiation into a focusing area for curing the medium in that focusing area. The focusing area is typically determined based on when in the process the curing is to be performed. The streak of electromagnetic radiation is directed towards the area in which providing of the structures takes place.

In a preferred embodiment of the method according to present invention, the streak of electromagnetic radiation is provided by directing a beam of electromagnetic radiation into the focusing area. In one embodiment of an apparatus according to the present invention this step has been embodied by use of a laser directing a laser beam towards a movable mirror reflecting the laser beam along a line thereby focusing the laser beam in the focusing area.

In a very important aspect of the present invention the method further comprises the step of post curing the medium after the structure has been provided. The post-curing step is a step which objective is to finalise or ending the providing of structure method. This is to be understood in the sense that as the medium after the stabilising step has not gained its final physical properties such as strength, phase, colour or the like the medium is post-cured so as to provide it its final physical properties.

The post-curing step is conducted by electromagnetic radiation from a second source.

With respect to the general method, the invention as defined in claim 1 relates in another and connected aspect also to a method utilising means for performing the different steps according to the present invention.

Applying the medium to the web may be by use of a application means, utilising impact application such as a printing unit, a flexo graphic printing unit, an offset unit, book printing unit, or the like or utilising non-impact application such as inkjet application or a syringe.

The application means is/are, of course, chosen depending on what medium is to be applied and to what extend the medium is to be applied. For instance the invention also incorporate the situation in which the medium is not dosed either as portions deposited on the length or dosed so as to have certain geometrical dimensions. Also the medium may be applied as a part of a normal printing process printing pictures, text or the like on the web and the structure may be provided to the surface of medium.

In a preferred embodiment, the method for providing structure is implemented as a part, an in-line, of a normal printing process, i.e. a process in which patterns such as pictures, text or the like are applied to the web and in this embodiment - and other embodiments - the medium is preferably conveyed on a length.

Also the structure is provided in/to the medium by contacting the medium with the mould as the web is being conveyed, which is combined with curing of the medium substantially at the moment when the medium is in contact with the mould in a contact area. The contact area is defined as the area of the mould being in contact with the medium during moulding.

Curing of the medium is provided by exposing the medium to electromagnetic radiation such as x-ray, ultra violet light, infra red light, a beam of electron's and/or visible light.

In certain preferred embodiments the mould may shield the area of the medium which is to be exposed to electromagnetic radiation so that the radiation may not be exposed to the medium. In such cases, the mould may be transparent with respect to the electromagnetic radiation exposed to the medium for curing so that the radiation may penetrate the mould in order to influence to medium.

Also the roller combined with the mould may shield the area of the medium which is to be exposed to electromagnetic radiation. In such cases the rotating roller having the mould may also be transparent with respect to the electromagnetic radiation used for curing the medium so that the radiation may be able to penetrate the roller as well as the mould in order to cure the medium.

As electromagnetic radiation often is available from a source giving either a non-focused beam or a beam focused in a small circular area, the moulding station may preferably comprise at least one means for substantially transforming the beam geometry, for instance by focusing, of the electromagnetic radiation used for curing the medium. The focusing means preferably focus the electromagnetic radiation in a streak extending across the medium.

The focusing means is/are in preferred embodiments of the present invention an integral part of the roller. The word integral covers in this context also the situation in which a focusing means is arranged inside a cavity of the roller in which case the focusing means may be held in place by external fixation means not connected to the roller or in which case the focusing means is rigidly connected to the roller so as to follow the motion of the roller.

The focusing means may alternatively be an integral part of the mould and/or combined with the roller having an integral focusing means.

Also the medium is post cured after the structure has been provided. Such a post curing is provided by exposing the medium to electromagnetic radiation such as x-ray, ultra violet light, infra red light, a beam of electron's, micro waves and/or light.

In preferred embodiments of the present invention the application means comprise(s) a rotating roller having an application sheet such as an application plate or the like which transfers the medium to the conveyed web by contacting the roller with the web.

In a specific preferred embodiment of the present invention in which the medium is a liquid when applied to the web the application means comprise(s) at least two rotating rollers, one of these being in contact with a reservoir for containing the medium and the rotating roller having the application sheet or the like is supplied with/takes up the medium from at least one of the two rotating rollers. The roller being in contact with the reservoir is preferably arranged so that a part of it is submerged into the medium. By this configuration the medium is transferred from the reservoir via the roller submerged to the roller having the application sheet and finally to the web. This configuration may preferably comprise an intermediate roller arranged so that the medium is transferred from the roller submerged via the intermediate roller to the roller having the application sheet.

Besides the general method and the method utilising named means the present invention also relates to an apparatus for providing a structure to a medium applied to a web as defined in claim 11.

The structure moulding apparatus is advantageous implemented inline with an ordinary printing process applying ordinary text and/or pictures to the length, but the moulding device may also very advantageously be used as a stand-alone device.

When used as a stand-alone device, the web is typically a sheet and the device may preferably be equipped with a sheet feeder and a transportation means adapted to transport sheets from the application station to the moulding station. Also when used as a stand-alone apparatus applying medium to a web and applying structure in/to the surface of the medium applied to the web, the web onto which the medium is to be applied is preferably winded up on a spool and the web is then fed into the device for application of the medium which in turn is provided a structure.

Embodiments of the apparatus according to the present invention the apparatus comprises means adapted to enabling the different steps performed according to the method for providing structure to a medium. Such means are
- curing means comprising means adapted for exposing electromagnetic radiation such as x-ray, ultra violet light, infra red light and/or visible light to the medium.
- a mould being transparent with respect to the electromagnetic radiation exposed to the medium for curing so that the radiation may penetrate the mould in order to influence to medium.
- a rotating roller having the mould being transparent with respect to the electromagnetic radiation used for curing the medium so that the radiation may be able to penetrate the roller as well as the mould in order to cure the medium.
- a mould or moulding station comprising at least one focusing means for substantially focusing the electromagnetic radiation used for curing the medium.
- focusing means being an integral part of the roller.
- focusing means an integral part of the mould eventually combined with focusing means being an integral part of the roller.
- post curing means for post curing the medium after the medium is cured.
- post curing means being adapted to expose electromagnetic radiation such as x-ray, ultra violet light, infra red light and/or light to the medium.
- application means comprising a rotating roller having a printing sheet, printing plate or the like which transfers the medium to the conveyed length by contacting the roller with the web
- application means comprising at least two rotating rollers, at least one of these being in contact with a reservoir for containing the medium and the rotating roller having the printing plate is supplied with/takes up the medium from at least one of the two rotating rollers.

In preferred embodiments of the method/apparatus according to the present invention, the medium is applied to the web by use of a non-impact application means such as a syringe. In that case the medium may either be applied while the web is being moved or the medium is applied during a stop of the web. This latter one might advantageously be implemented is a situation in which the movement of the web is stopped for instance for cutting out sections of the web.

In the embodiment of the invention, in which rollers are utilised in the application and moulding means, and the moulding the repeating distance between the medium may easily be changed by replacing the rollers with rollers having different diameters.

Furthermore, when the device according to the present invention is applied in-line with an ordinary printing device, the repeating distance of the moulding device may easily be made equal to the repeating distance of the ordinary printing device and the need for prior art positioning means for positioning the medium on the web has been rendered superfluous.

As mentioned above the method and apparatus according to the present invention provides a very elegant solution to the problem of providing surface structures to a medium applied to a web. One important feature of the present invention is that the method and apparatus may be able to apply the medium to the same material as has been printed, or is to be printed, in an ordinary manner. Thereby, the need for positioning a pre-produced surface relief structure relative to a position on a web in an in-line process, in which it may be a part of, has been rendered superfluous, as the method and apparatus according to the present invention replicates a structures from a mould preferably being rotating, whereby the same technology regarding repeating (step out) used in printing may be applied in connection with the present invention.

### DETAILIED DESCRIPTION OF PREFERRED EMBODIMENTS OF THE INVENTION

In the following the invention will be described in greater details and in particular preferred embodiments thereof in connection with the accompanying drawings in which
- Fig. 1: shows a first preferred embodiment of a device for applying structures to a medium according to the present invention utilising the method according to the present invention,

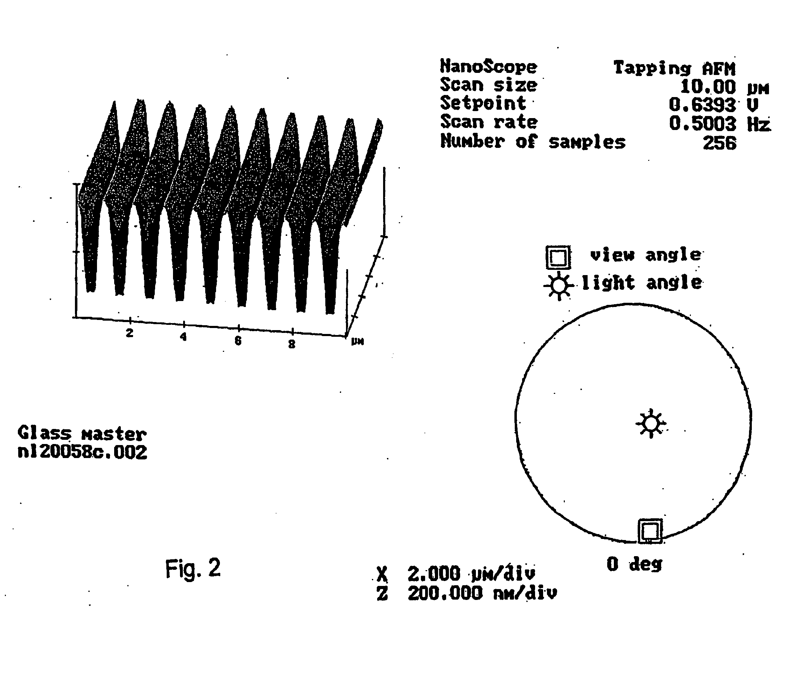

- Fig. 2: shows a surface scan of a photoresist master diffraction grating using an atomic force microscope (AFM). The depth of the grating profile is 300 nm and the period is approximately 1000 nm. The master is being the one from which a mould is made.

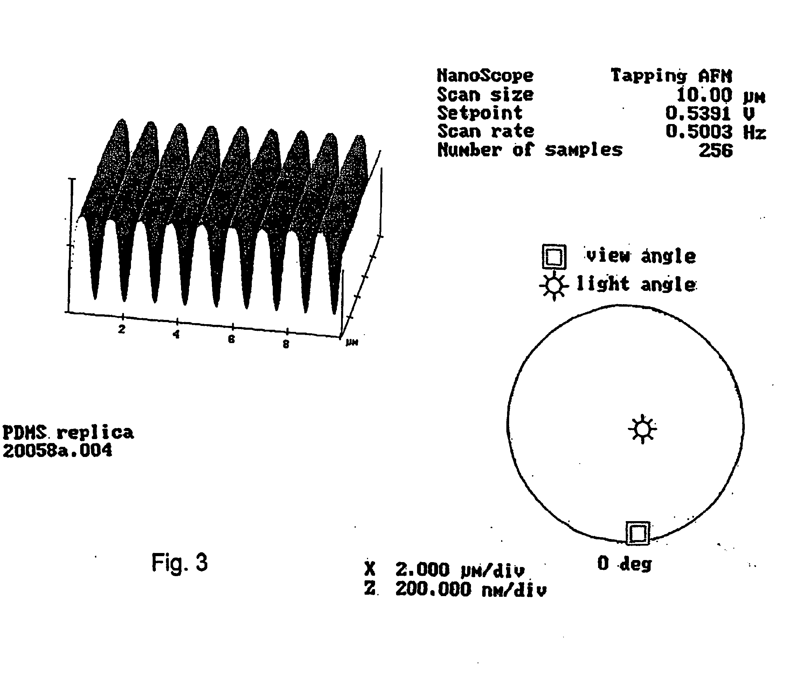

- Fig. 3: shows a surface scan of the polydimethylsiloxane (PDMS) mould using an atomic force microscope (AFM).

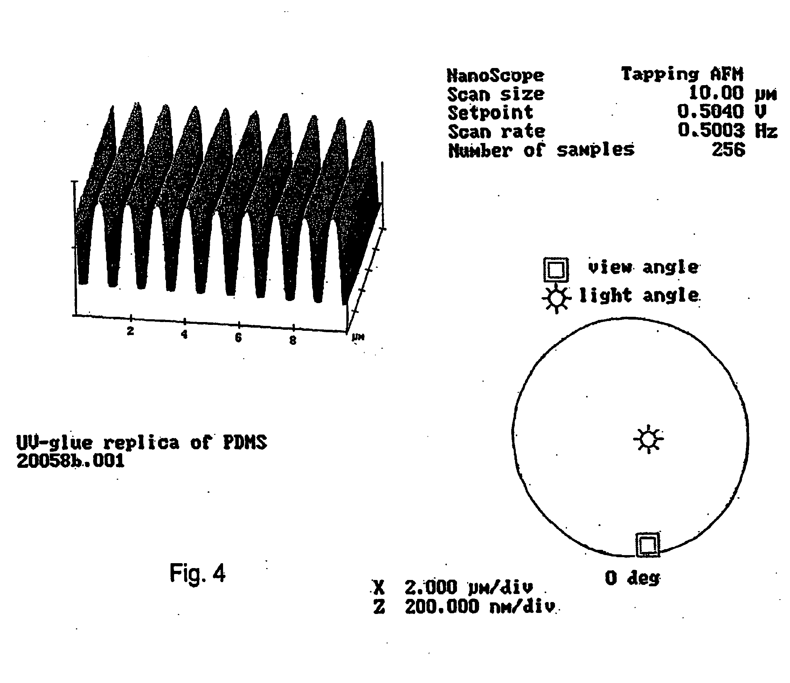

- Fig. 4: shows a surface scan, using an atomic force microscope (AFM), of the replica formed in an UV curable polymer from the PDMS mould.

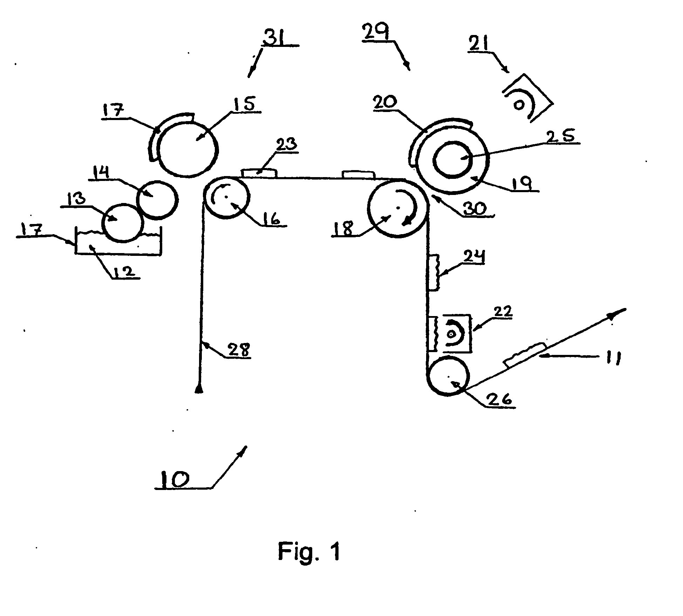

With reference to fig. 1 a first embodiment of the present invention will now be described in greater details.

The web 28 onto which the structure is to be applied is transported through the holographic printing device 10 by use of rollers 16, 26 in combination with the pair of rollers 18, 19. In the preferred embodiment shown in Fig. 1 the roller 16 is the roller which drag the web 28 through the rotational moulding device. In this case the moulding device is followed by another processing station which has a roller dragging the web through the pair of rollers 18, 19 and passed the roller 26.

Also, in case the mould 20 extends all periphery of the roller the roller 25 may be set idling as the web 28 then will contact the mould 20 all time which will rotate the roller 25.

Furthermore, the printing device may comprise a wind-up roller winding up the web after it has left the printing device, i.e. after the passing the roller 26.

The rotation of the rollers is performed by motors such as electrical motors being connected directly to the shaft of the roller in question or via a transmission in case a gear is applied in order to set the rotation of the roller different from the rotation of the motor.

In case the same motor is applied for rotating both the pair of rollers 18,19 and the roller 16 a gear is inserted so as to set the peripheral speed of the all the rollers rotated equal.

A printing colour such as lacquer, glue or other radiation-post curing medium is applied to the material, the web, onto which the structure is to be applied. In the first embodiment of the invention that material is a web comprised of paper, plastic film, aluminium foils or the like and the application of the medium is done in a printing process.

The medium is typically chosen from the group comprising the following: radiation curable polymers such as printing inks, lacquers, adhesive or the like.

The printing process may suitable make use of flexo-printing machine comprising the medium transporting rollers 13, 14 and a cliché-roller 15 having printing plate 17. The medium 12, such as lacquer, which is contained in the trough 27 is being transferred via rollers 13, 14 to the printing plate 17 mounted on the cliché-roller 15 which by use of the roller 16 as counter pressure means transfers the lacquer partially or as a full coverage (or coating) to the web 28.

The material of the rollers 13, 14 and the material of the printing plate 17 is depending on which medium is to be applied to the web. 13 is in the preferred embodiment a pan roller which is constituted by a rubber covered roller. 14 is in the preferred embodiment a screened roller having a surface of or ceramics or steel and 17 is a photo-polymer plate or alternatively an engraved rubber plate.

Also depending on which type of medium is to be applied to the web the surface of the rollers 13, 14 and the printing plate 16 may be given a surface treatment in order to intensify the adherence properties of the surfaces. A crucial point in connection with the present invention is to be able to control that the correct amount of medium is applied to the web.

The repetition of the medium on the web may be controlled by applying more than one printing plate 17 to the roller 15 distributed along the periphery of the roller 15. In the preferred embodiment of Fig. 1 the printing plate 17 is provided as an elevation provided on a cliché extending along the whole periphery of the roller 15.

After the medium 23 has been applied to the web 28 the medium 23 is transported to the moulding station 29 for moulding the structure into the upper surface of the medium 23. The moulding station comprises the pair of rollers 18, 19, a transparent mould 20 being an integral part or mounted on the roller 19. The roller 19 is also transparent so as to allow for instant ultraviolet light or in general electromagnetic radiation to pass.

The nature of the surface of the mould 20 should be so that the medium 23 does not adhere to the mould when the medium 23 has been stabilised. In the preferred embodiment of the apparatus the mould 20 is manufactured from an elastomer of the type polydimetylsiloxane (PDMS) and the mould has been manufactured by taking a cast of a photo resistantsurface relief master or a nickel shim.

The structure is laid down in the transparent mould 20 mounted on the transparent moulding roller 19 comprising optics 25 for focusing radiation in a predetermined direction - in the present example the radiation is considered to be ultra violet light originating from a lamp 21 and the optics is a convex lens focusing a beam of light into a streak of light focused at the nip 30 between the medium 23 and the mould 20. One such convex lens is a part of a cylinder having a cross section comprising a sector of a circle and a straight line. More than one lens may be applied in the case where the structure is sectionalised so as to only expose light to the areas of the medium that is to be exposed.

The bulb of the lamp 21 has been partly covered by a shield so as to avoid radiation to the surrounding in order to avoid eye injuries to persons operating the holographic printing device. Furthermore, the lamp comprises a reflector for focusing the radiation in the direction of the roller 19. The lamp 21 may be located inside the roller 19, but by arranging the lamp outside the roller a self-cleaning may be obtained.

Alternatively to the use of optics, a beam of light which is swept across the nip area may be used. In that case a laser beam is reflected by use of a mirror and the reflection is controlled by use of for instance a computer controlling a stepper motor turning the mirror in such a motion that the reflected light beam sweeps across the nip area.

As the web 28 is conveying the medium towards the pair of rollers 18, 19 the medium will at some moment contact the mould. In order to control that the medium 23 contacts the mould at the right moment (at the right position) setting or controlling of the phase angles between the roller 15 and the roller 19 must be performed. The right moment or position is where the front end of the medium 23 is being contacted by the front end of the mould (the front is seen with respect to the movement of the mould 20 and the medium 23). This controlling or setting may be provided by connecting the two rollers 15, 19 rigidly, for instance via a gear.

One way of controlling the movement of the web in relation to the phase angle of the moulding station 29 and/or the application station 31 is to provide indexing marks to the web 28. A sensor that is connected to a controlling unit controlling the phase angle of the rollers 19 and/or 15 may then read these indexing marks.

The distance between the application station 31 and the moulding station 29 must be set by adjustment of the phase angle between the rollers 15 and 19 in order for the medium 23 to meet the mould 20 at the right moment.

The moment where the structures laid down in the mould 20 is in contact with the medium 23 with the roller 18 acting as a counter pressure means, at least the surface of the medium 23 (made of lacquer) comprising the structures is cured by the ultra violet light exposed to the lacquer whereby a replica of structure laid down in the mould 20 is transferred to the surface of the medium 23.

As mentioned above the light has been focused by the optics 25 focusing the light into a streak of light in the nip 30 so that only the part of the medium situated in the nip area is cured which imply that the upstream medium is not affected by the light. When the medium is cured it will attach more to the web 28 than to the mould 20 (the curing change the adherence of the surface of the medium 23 towards a less adherence) whereby it will transfer to the web at the point (area) of release, i.e. the point or area being cured.

The height of the nip 30, i.e. the distance between the surface of the mould 20 and the web 28 (measured normal to the web 28) must be adapted to the thickness of the medium 23. For instance this distance may be so that contact between bottom of valleys of the structure laid down in the mould 20 and the surface of the medium 23 is guaranteed. This measure may also be used to set the thickness of the medium, as heights of the structure are not normally allowed to contact the web 28. This indicates that the amount - or the thickness - of the structure is to be dosed so that penetration of medium 23 by the heights does not occur.

One way to assure fully contact in case the medium is compressible is to arrange the rollers 18 and 19 so that the height of the nip is smaller than the height of the medium 23.

After the medium has passed by the moulding station 29 an additional post curing is used in order to through cure the structure. Such an additional post curing is carried out by passing the medium 23 pass an additional source of ultra violet light 22 that is shown in the embodiment represented in fig. 1.

## Claims

1. A method for providing a surface structure to an electromagnetic radiation curable medium (23) applied to a web (28) to form a diffractive optical element, wherein said method utilises a moulding station (29) and comprises the successive steps of:
- applying the medium (23) to the web (28);
- conveying the medium (23) to the moulding station (29) by conveying the web (28);
- providing at the moulding station (29) the structure in/to the medium (23) by contacting the medium by a mould (20);
**characterised by**
- the moulding station further comprising a rotating roller (19) carrying the mould (20) and a roller (18) acting as counter pressure means and forming a nip (30) with the rotating roller (19) and the structure being provided while the medium (23) and the web (28) is situated in between the roller (18) acting as a counter pressure means and the mould (20); and
the method further comprising the step of:
- curing the medium (23) in the nip substantially by means of electromagnetic radiation while the structure is being provided to the medium (23) so as to stabilise the shape of the structures provided in/to the medium (23) but without through curing the medium; and
- further comprising, after the structure has been provided and stabilised, moving on the web and then conducting a post curing step by the application to the medium of electromagnetic radiation from a second source thereof to through cure the medium to provide to the medium its final physical properties.

2. A method according to claim 1, wherein the curing is performed by focusing a streak of electromagnetic radiation into a focusing area for curing the medium (23) in said focusing area.

3. A method for providing a structure to a medium (23) according to claim 1 or claim 2 comprising
* - applying the medium (23) to the web (28) by use of a application means, utilising impact application such as a printing unit, a flexo graphic printing unit, an offset unit, book printing unit, or the like or utilising non-impact application such as inkjet application or a syringe
* - conveying the web (28) from the application means to a moulding station, and
* - providing the structures to/in the medium (23) by contacting the medium (23) with the mould (20) as the web (28) is being conveyed.

4. A method according to claim 3, wherein the mould (20) is transparent with respect to the electromagnetic radiation exposed to the medium (23) for curing so that the radiation may penetrate the mould (20) in order to influence to medium (23).

5. A method according to claim 4, wherein the rotating roller (19) is transparent with respect to the electromagnetic radiation used for curing the medium so that the radiation may be able to penetrate the rotating roller (19) as well as the mould (20) in order to stabilise the medium (23).

6. A method according to claim 5, wherein the moulding station (29) further comprises at least one means for substantially focusing the electromagnetic radiation used for curing the medium (23).

7. A method according to claim 6, wherein the means for focusing is an integral part of the rotating roller (19).

8. A method according to claim 6 or 7, wherein the means for focusing is an integral part of the mould (20).

9. A method according to any of the preceding claims, wherein the application means (31) comprises a rotating roller (15) having an application sheet (17) such as an application plate or the like which transfers the medium (23) to the conveyed web (28) by contacting the application sheet (17) with the web (28).

10. A method according to claim 3, wherein the application means (31) comprises at least two rotating rollers (13) (14), one of these being in contact with a reservoir for containing the medium (23) and the rotating roller (15) having the application sheet (17) or the like is supplied with/takes up the medium from at least one of the two rotating rollers (13) (14).

11. An apparatus for providing a structure to a medium (23) applied to a web (28) comprising
* - application means (31), such as impact application means, preferably such as a flexo graphic printing device, a printing unit, an offset unit, book printing unit, or the like or non-impact application means such as an inkjet or a syringe application means applying the medium (23) to the web (28),
* - conveying means for conveying the web (28) and thereby the medium (23) from the application means (31) to a moulding station (29), said moulding station (29) comprises a rotating roller (19) having a mould (20) for providing a diffractive optical element structure to at least a part of the medium (23) and is arranged downstream of the application means (31) when seen in the conveying direction,
**characterised in that**
* - the moulding station further comprises a roller (18) acting as a counter pressure means arranged opposite to and forming a nip with the rotating roller (19) in such a manner that the structure is being provided while the medium (23) and the web (28) is situated in the nip (30) between the roller (18) acting as a counter pressure means and the rotating roller (19); and
the apparatus further comprises:
* curing means for curing substantially in the nip at least the part of medium (23) in which the structure is provided by means of a first source of electromagnetic radiation, so as to stabilise the shape of the structure provided in/to the medium (23) and
* a post curing station comprising a second source of electromagnetic radiation for post curing the medium after the medium is stabilised.

12. An apparatus according to claim 11, wherein the mould (20) is transparent with respect to the electromagnetic radiation exposed to the medium for curing so that the radiation may penetrate the mould (20) in order to influence to medium (23).

13. An apparatus according to claim 12, wherein the rotating roller (19) having the mould (20) is transparent with respect to the electromagnetic radiation used for curing the medium (23) so that the radiation may be able to penetrate the rotating roller (19) as well as the mould (20) in order to stabilise the medium (23).

14. An apparatus according to claim 13, wherein the mould (20) or moulding station (29) comprises at least one focusing means for substantially focusing the electromagnetic radiation used for curing the medium (23).

15. An apparatus according to claim 14, wherein the focusing means is/are an integral part of the rotating roller (19).

16. An apparatus according to claim 14 or 15, wherein the means for focusing is an integral part of the mould (20).

17. An apparatus according to any one of the claims 11 to 16, wherein the application means (31) comprises a rotating roller (15) having a printing sheet (17), printing plate or the like which transfers the medium (23) to the conveyed web (28) by contacting the printing sheet (17) with the web (28).

18. An apparatus according to claim any of the claims 11-17, wherein the application means (31) comprises at least two rotating rollers (13) (14), at least one of these being in contact with a reservoir for containing the medium (12) and the rotating roller (15) having the printing plate is supplied with/takes up the medium (12) from at least one of the two rotating rollers (13) (14).

19. An apparatus according to any of the claims 11 -18, wherein the surface of the mould roller (20) which contacts the curable medium is formed from an elastomer of the type polydimethylsiloxane (PDMS).

## Patentansprüche

1. Verfahren zum Bilden einer Oberflächenstruktur an einem durch elektromagnetische Strahlung aushärtbarem Medium (23), welches auf eine Bahn (28) aufgetragen ist, um ein diffraktives optisches Element zu bilden, wobei das Verfahren eine Formstation (29) verwendet und die aufeinanderfolgenden Schritte aufweist:
- Auftragen des Mediums (23) auf die Bahn (28);
- Fördern des Mediums (23) zu der Formstation (29) durch Fördern der Bahn (28);
- Bilden der Struktur in/an dem Medium (23) an der Formstation (29) durch Kontaktieren des Mediums mit einem Werkzeug (20);
**dadurch gekennzeichnet, dass**
- die Formstation weiterhin eine das Werkzeug (20) tragende rotierende Walze (19) aufweist, und eine Walze (18) aufweist, die als Gegendruckmittel dient und einen Walzenspalt (30) mit der rotierenden Walze (19) bildet, und wobei die Struktur zur Verfügung gestellt wird, während das Medium (23) und die Bahn (28) sich zwischen der als ein Gegendruckmittel wirkenden Walze (18) und dem Werkzeug (20) befinden; und
wobei das Verfahren weiterhin den Schritt aufweist:
- Aushärten des Mediums (23) in dem Walzenspalt, im wesentlichen mittels elektromagnetischer Strahlung, während das Medium (23) strukturiert wird, um so die Form der in/an dem Medium (23) zur Verfügung gestellten Strukturen zu stabilisieren, jedoch ohne das Medium durchzuhärten; und
- nachdem die Struktur zur Verfügung gestellt und stabilisiert worden ist, weiterhin ein Bewegen auf der Bahn und anschließendes Ausführen eines Post-Aushärtungsschrittes durch die Anwendung von elektromagnetischer Strahlung einer zweiten Quelle auf das Medium aufweisend, um das Medium durchzuhärten, um dem Medium seine endgültige physikalischen Eigenschaften zur Verfügung zu stellen.

2. Verfahren nach Anspruch 1,
wobei das Aushärten ausgeführt wird durch Fokussieren eines Streifens elektromagnetischer Strahlung in ein Fokussiergebiet zum Aushärten des Mediums (23) in dem Fokussiergebiet.

3. Verfahren zum Bilden einer Struktur an einem Medium (23) gemäß Anspruch 1 oder Anspruch 2, aufweisend
- Auftragen des Mediums (23) auf die Bahn (28) durch Verwendung eines Auftragsmittels, Verwenden von Pressapplikation, wie etwa mit einer Druckeinheit, einer flexographischen Druckeinheit, einer Offset-Einheit, einer Buchdruckeinheit oder dergleichen, oder Verwenden einer Nicht-Pressapplikation, wie etwa einer Tintenstrahlapplikation oder einer Spritze
- Fördern der Bahn (28) von den Auftragsmitteln zu einer Formstation, und
- Bilden der Strukturen an/in dem Medium (23) durch Kontaktieren des Mediums (23) mit dem Werkzeug (20), wenn die Bahn (28) gefördert wird.

4. Verfahren nach Anspruch 3,
wobei das Werkzeug (20) bezüglich der elektromagnetischen Strahlung, der das auszuhärtende Medium (23) ausgesetzt wird, transparent ist, so dass die Strahlung das Werkzeug (20) durchdringen kann, um das Medium (23) zu beeinflussen.

5. Verfahren nach Anspruch 4,
wobei die rotierende Walze (19) bezüglich der zum Aushärten des Mediums verwendeten elektromagnetischen Strahlung transparent ist, so dass die Strahlung in der Lage sein kann, die rotierende Walze (19) sowie das Werkzeug (20) zu durchdringen, um das Medium (23) zu stabilisieren.

6. Verfahren nach Anspruch 5,
wobei die Formstation (29) weiterhin mindestens ein Mittel zum im wesentlichen Fokussieren der zum Aushärten des Mediums (23) verwendeten elektromagnetischen Strahlung aufweist

7. Verfahren nach Anspruch 6,
wobei die Mittel zum Fokussieren einen integralen Teil der rotierenden Walze (19) bilden.

8. Verfahren nach Anspruch 6 oder 7,
wobei die Mittel zum Fokussieren einen integralen Teil des Werkzeugs (20) bilden

9. Verfahren nach einem der vorstehenden Ansprüche,
wobei das Auftragsmittel (31) eine rotierende Walze (15) mit einem Auftragsbogen (17), wie etwa eine Auftragsplatte oder dergleichen aufweist, welche das Medium (23) auf die geführte Bahn (28) durch Kontaktieren des Auftragsbogens (17) mit der Bahn (28) transferiert.

10. Verfahren nach Anspruch 3,
wobei das Auftragsmittel (31) mindestens zwei rotierende Walzen (13), (14) aufweist, wobei eine von diesen in Kontakt mit einem Reservoir zum Enthalten des Mediums (23) ist, und wobei die rotierende Walze (15), die den Auftragsbogen (17) oder dergleichen trägt, von mindestens einer der beiden rotierenden Walzen (13), (14) mit dem Medium versorgt wird, bzw. das Medium von diesen aufnimmt.

11. Vorrichtung zum Bilden einer Struktur an einem auf einer Bahn (28) aufgetragenem Medium (23), aufweisend:
- Auftragsmittel (31), wie etwa Pressauftragsmittel, bevorzugt wie etwa ein flexographisches Druckmittel, eine Druckeinheit, eine Offset-Einheit, eine Buchdruckeinheit oder dergleichen oder Nichtpressauftragsmittel wie etwa ein Tintenstrahl- oder ein Spritzauftragsmittel, welches das Medium (23) auf die Bahn (28) aufträgt,
- Fördermittel zum Fördern der Bahn (28) und somit des Mediums (23) von den Auftragsmitteln (31) zu einer Formstation (29), wobei die Formstation (29) eine rotierende Walze (19) mit einem Werkzeug (20) zum Bilden einer diffraktiven optischen Elementstruktur auf mindestens einem Teil des Mediums (23) aufweist, und in Förderrichtung gesehen stromabwärts von den Auftragsmitteln (31) angeordnet ist,
**dadurch gekennzeichnet, dass**
- die Formstation weiterhin eine Walze (18) aufweist, die als ein Gegendruckmittel gegenüber der rotierenden Walze (19) angeordnet ist und mit dieser einen Walzenspalt bildet, in einer Weise, dass die Struktur zur Verfügung gestellt wird, während das Medium und die Bahn (28) sich in dem Walzenspalt (30) zwischen der Walze (18), die als ein Gegendruckmittel wirkt, und der rotierenden Walze (19) befinden; und
wobei die Vorrichtung weiterhin aufweist:
Aushärtungsmittel, um im wesentlichen innerhalb des Walzenspaltes mindestens den Teil des Mediums (23) mittels einer ersten Quelle elektromagnetischer Strahlung auszuhärten, in welchem die Struktur zur Verfügung gestellt wird, um so die Form der in/auf dem Medium (23) zur Verfügung gestellten Struktur zu stabilisieren, und
- eine Post-Aushärtungsstation mit einer zweiten Quelle elektromagnetischer Strahlung für eine Post-Aushärtung des Mediums nachdem das Medium stabilisiert ist.

12. Verfahren nach Anspruch 11,
wobei das Werkzeug (20) bezüglich der elektromagnetischen Strahlung, der das auszuhärtende Medium ausgesetzt ist, transparent ist, so dass die Strahlung das Werkzeug (20) durchdringen kann, um das Medium (23) zu beeinflussen.

13. Vorrichtung nach Anspruch 12,
wobei die das Werkzeug (20) aufweisende rotierende Walze (19) bezüglich der zum Aushärten des Mediums (23) verwendeten elektromagnetischen Strahlung transparent ist, so dass die Strahlung in der Lage sein kann, die rotierende Walze (19) sowie das Werkzeug (20) zu durchdringen, um das Medium (23) zu stabilisieren.

14. Vorrichtung nach Anspruch 13,
wobei das Werkzeug (20) oder die Formstation (29) mindestens ein Fokussiermittel zum im wesentlichen Fokussieren der elektromagnetischen Strahlung, die zum Aushärten des Mediums (23) verwendet wird, aufweist.

15. Vorrichtung nach Anspruch 14,
wobei das/die Fokussiermittel ein integraler Teil der rotierenden Walze (19) ist/sind.

16. Vorrichtung nach Anspruch 14 oder 15,
wobei das Mittel zum Fokussieren ein integraler Teil des Werkzeugs (20) ist.

17. Vorrichtung nach einem der Ansprüche 11 bis 16,
wobei das Auftragsmittel (31) eine rotierende Walze (15) mit einem Druckbogen (17), einer Druckplatte oder dergleichen aufweist, welche das Medium (23) auf die geförderte Bahn (28) durch Kontaktieren des Druckbogens (17) mit der Bahn (28) transferiert.

18. Vorrichtung nach einem der Ansprüche 11 - 17,
wobei die Auftragsmittel (31) mindestens zwei rotierende Walzen (13), (14), aufweisen, wobei mindestens einer von diesen in Kontakt mit einem Reservoir zum Enthalten des Mediums (12) steht, und wobei die rotierende Walze (15) mit der Druckplatte des Mediums (12) von mindestens einer der beiden rotierenden Walzen (13), (14) aufnimmt bzw. mit dem Medium (12) von diesen versorgt wird.

19. Vorrichtung nach einem der Ansprüche 11- 18,
wobei die Oberfläche der Formwalze (20), welche das aushärtbare Medium kontaktiert, aus einem Elastomer des Typs Polydimethylsiloxan (PDMS) ausgebildet ist

## Revendications

1. Procédé de fourniture d'une structure de surface à un matériau (23) traitable par radiation électromagnétique et appliqué sur un tissu (28), pour former un élément optique diffractif, ledit procédé utilisant un poste de moulage (29) et comprenant les étapes successives suivantes :
- application du matériau (23) sur le tissu (28) ;
- transport du matériau (23) jusqu'au poste de moulage (29) par déplacement du tissu (28) ;
- au poste de moulage (29), fourniture de la structure dans/sur le matériau (23) par mise en contact du matériau avec une forme (20) ;
**caractérisé en ce que**
- le poste de moulage comprend en outre un cylindre tournant (19) qui porte la forme (20) et un cylindre (18) qui agit en moyen de contre-pression et forme avec le cylindre tournant (19) un lieu de pincement (30), et **en ce que** la structure est fournie pendant que le matériau (23) et le tissu (28) se trouvent entre le cylindre (18), agissant en moyen de contre-pression, et la forme (20) ; et
le procédé comprenant en outre l'étape de :
- traitement du matériau (23) dans le lieu de pincement essentiellement au moyen d'une radiation électromagnétique pendant que l'on fournit la structure au matériau (23), de sorte à stabiliser la forme des structures fournies dans/sur le matériau (23) mais sans traiter le matériau au travers ; et
- comprenant en outre, après que la structure a été fournie et stabilisée, le déplacement sur le tissu puis la réalisation d'une étape de post-traitement par l'application au matériau d'une radiation électromagnétique à partir d'une seconde source de celle-ci pour traiter le matériau au travers pour donner au matériau ses propriétés physiques finales.

2. Procédé selon la revendication 1, **caractérisé en ce qu'**on réalise le traitement en concentrant un rayon de radiation électromagnétique dans une zone foyer pour traiter le matériau (23) dans ladite zone foyer.

3. Procédé de fourniture d'une structure à un matériau (23) selon la revendication 1 ou la revendication 2, comprenant :
- une application du matériau (23) sur le tissu (28) par l'emploi de moyens d'application qui utilisent soit une application par impact telle qu'une unité d'impression, une unité d'impression flexographique, une unité d'impression offset, une unité d'impression de livres ou similaire, soit une application sans impact telle qu'une application par jet d'encre ou une seringue ;
- un déplacement du tissu (28) du moyen d'application au poste de moulage et
- une fourniture des structures dans/sur le matériau (23) par mise en contact du matériau (23) avec la forme (20) pendant le déplacement du tissu (28).

4. Procédé selon la revendication 3, **caractérisé en ce que** la forme (20) est transparente en ce qui concerne la radiation électromagnétique à laquelle le traitement expose le matériau (23) de façon à ce que la radiation puisse traverser la forme (20) afin d'agir sur le matériau (23).

5. Procédé selon la revendication 4, **caractérisé en ce que** le cylindre tournant (19) est transparent en ce qui concerne la radiation électromagnétique employée pour traiter le matériau de façon à ce que la radiation puisse traverser tant le cylindre tournant (19) que la forme (20) afin de stabiliser le matériau (23).

6. Procédé selon la revendication 5, **caractérisé en ce que** le poste de moulage (29) comprend en outre au moins un moyen pour concentrer la radiation électromagnétique employée pour traiter le matériau (23).

7. Procédé selon la revendication 6, **caractérisé en ce que** le moyen pour concentrer est monobloc avec le cylindre tournant (19).

8. Procédé selon la revendication 6 ou 7, **caractérisé en ce que** le moyen pour concentrer est monobloc avec la forme (20).

9. Procédé selon l'une quelconque des revendications précédentes, **caractérisé en ce que** les moyens d'application (31) comprennent un cylindre tournant (15) qui a une tôle d'application (17), telle que plaque d'application ou similaire, et qui transfère le matériau (23) sur le tissu en déplacement (28) en mettant en contact la tôle d'application (17) avec le tissu (28).

10. Procédé selon la revendication 3, **caractérisé en ce que** les moyens d'application (31) comprennent au moins deux cylindres tournants (13) et (14), dont l'un est en contact avec un réservoir contenant le matériau (23), et le cylindre tournant (15) portant la plaque d'application (17) ou similaire, qui est alimenté en/fait monter le matériau d'au moins un des deux cylindres tournants (13) et (14).

11. Appareil pour fournir une structure à un matériau (23) appliqué sur un tissu (28) comprenant :
- des moyens d'application (31), tels que des moyens d'application par impact, de préférence tels qu'un dispositif d'impression flexographique, une unité d'impression, une unité d'impression offset, une unité d'impression de livres ou similaire, ou des moyens d'application sans impact, tels que des moyens d'application par jet d'encre ou seringue, qui appliquent le matériau (23) sur le tissu (28) ;
- des moyens de transport pour déplacer le tissu (28) et de cette façon transporter le matériau (23) des moyens d'application (31) à un poste de moulage (29), ledit poste de moulage (29) comprenant un cylindre tournant (19) qui porte une forme (20) pour fournir une structure à au moins une partie du matériau (23) et étant disposé en aval des moyens d'application (31) quand on regarde dans le sens du transport ;
**caractérisé en ce que**
- le poste de moulage comprend en outre un cylindre (18) qui, agit en moyen de contre-pression, est disposé en face du cylindre tournant (19), et forme avec lui un lieu de pincement, de telle manière que la structure est fournie pendant que le matériau (23) et le tissu (28) se trouvent dans le lieu de pincement (30) entre le cylindre (18) agissant en moyen de contre-pression et le cylindre tournant (19) ; et
**en ce que** l'appareil comprend en outre
- des moyens de traitement pour traiter, essentiellement dans le lieu de pincement, au moins une partie du matériau (23), moyens dans lesquels on fournit la structure au moyen d'une radiation électromagnétique, de sorte à stabiliser la forme de la structure fournie dans/sur le matériau (23) et
- un poste de post-traitement comprenant une seconde source de rayonnement électromagnétique pour post-traiter le matériau après stabilisation du matériau.

12. Appareil selon la revendication 11, **caractérisé en ce que** la forme (20) est transparente en ce qui concerne la radiation électromagnétique à laquelle le traitement expose le matériau de façon à ce que la radiation puisse traverser la forme (20) afin d'agir sur le matériau (23).

13. Appareil selon la revendication 12, **caractérisé en ce que** le cylindre tournant (19) qui porte la forme (20) est transparent en ce qui concerne la radiation électromagnétique employée pour traiter le matériau (23) de façon à ce que la radiation puisse traverser tant le cylindre tournant (19) que la forme (20) afin de stabiliser le matériau (23).

14. Appareil selon la revendication 13, **caractérisé en ce que** la forme (20) ou le poste de moulage (29) comprend au moins un moyen pour concentrer sensiblement la radiation électromagnétique employée pour traiter le matériau (23).

15. Appareil selon la revendication 14, **caractérisé en ce que** le(s) moyen(s) pour concentrer est/sont mono-bloc(s) avec le cylindre tournant (19).

16. Appareil selon la revendication 14 ou 15, **caractérisé en ce que** le moyen pour concentrer est monobloc avec la forme (20).

17. Appareil selon l'une quelconque des revendications 11 à 16, **caractérisé en ce que** les moyens d'application (31) comprennent un cylindre tournant (15) qui porte une plaque d'impression (17), telle que cliché ou similaire, et qui transfère le matériau (23) sur le tissu en déplacement (28) en mettant en contact la plaque d'impression (17) avec le tissu (28).

18. Appareil selon l'une quelconque des revendications 11 à 17, **caractérisé en ce que** les moyens d'application (31) comprennent au moins deux cylindres tournants (13) et (14), dont l'un au moins est en contact avec un réservoir contenant le matériau (12), et le cylindre tournant (15) portant le cliché, qui est alimenté en/fait monter le matériau (12) d'au moins un des deux cylindres tournants (13) et (14).

19. Appareil selon l'une quelconque des revendications 11 à 18, **caractérisé en ce que** la surface du cylindre de forme (20) qui vient au contact du matériau à traiter est constituée d'un élastomère du type poly-diméthylsiloxane (PDMS).
